# EUROPEAN PATENT APPLICATION

(11) **EP 0 803 298 A1**
(43) Date of publication of application: **29.10.1997**
(21) Application number: 97101593.8
(22) Date of filing: 03.02.1997
(51) Int. Cl.: B08B 3/08, C23G 5/04, B29B 17/02, B01J 3/02

(54) **Method and plant for the solvent treatment of a work under heremetic conditions**

(30) Priority: 05.02.1996 JP 42049/96; 05.02.1996 JP 17104/96
(71) Applicant: Gibbins, Laurence Henry, Atherstone, Coleshill (GB); Nakaya, Keiji, Yotsukaido City, Chibi Prefecture (JP)
(72) Inventor: Gibbins, Laurence Henry, Atherstone, Coleshill (GB); Nakaya, Keiji, Yotsukaido City, Chibi Prefecture (JP)
(74) Representative: Lishman, Peter David

(57) **Abstract**

The invention relates to a method and plant for the solvent treatment of a work under hermetic conditions. The main equipment is the work input/extract box (3,3'), treating equipment (2) and pressure reduction apparatus (5) each of which is connected hermetically. The work input/extract box (3,3') has a lid (3-1,3'-1) for input and extract of work (11) which can be hermetic and the box (3,3') and treating equipment (2) are connected by a shutter (12-1,12-2) which can shut the entrance where the work (11) passes in and out.

The lid (3-1,3'-1) of the work input/extract box (3,3') is opened and the work (11) is placed while the shutter (12-1,12-2) is closed and after the lid (3-1,3'-1) of the box (3,3') is closed hermetically, gas in the work input/extract box (3,3') is absorbed and purged outside the system by the pressure reduction apparatus (5). Then, gas in the treating equipment (2) is introduced and pressure inside the input/extract box (3,3') and that in treating equipment are equalised. Next, the shutter (12-1,12-2) between the input/extract box (3,3') and treating equipment (2) is opened and the work (11) is transferred to the treating equipment (2) from the input/extract box (3,3') then, the treatment is performed in the treating equipment (2). After the work (11) is treated in the treating equipment (2), the work (11) is transferred to the input/extract box (3,3'). The shutter (12-1,12-2) is closed and gas in the input/extract box (3,3') is absorbed and returned to the treating equipment (2) by the pressure reduction apparatus (5) after the input/extract box (3,3') and treating equipment (2) are insulated. Then, air is introduced into the input/extract box (3,3') to be under atmospheric pressure and the lid (3-1,3'-1) is opened to take out the work (11). Change in the gas quantity in the treating equipment (2) is balanced by change in the volume of the gas holder (4) so that no gas is purged outside the system and no air flows in from outside the system.

## Description

### Background of the invention and the conventional technology

This invention relates to the technology to reduce the loss of solvent which occurs when solvent is used to treat machine oil of machine parts, fluxes, process oil of heat treatment, and to dry clean clothes or provide coating where a coating agent is dissolved in solvent and to dissolve the waste plastics.
So far, chlorine, fluorine hydrocarbon solvents have mainly been used to wash precision parts, but due to the possibility of them destroying the global ozone layer, natural environment and also in view of the labour environment, their use has been limited and the reduction of solvent loss, that is, hermetical matter has been critical.
Meanwhile, as an alternative to other solvents, flammable solvents have been used but, for the prevention of an explosion or the reduction of the use of an inert gas such as nitrogen gas, etc for air replacement, the matter of an air tight seal is required. In the meantime, in the normal method of treatment using solvent, it has been conventional to treat work in open treating equipment, having an open part which allows the input and extraction of work.
It has been said to be difficult to avoid leaks by dispersion of the solvent gas or loss of solvent accompanied by the work. Meanwhile, if air or moisture in air comes into the treating equipment, problems caused by open equipment occur. These problems are effluents including solvent or water freezing in the equipment or corrosion of equipment or deterioration of solvent etc. So, to solve these problems, the installation of equipment which removes moisture or the introduction of a large quantity of nitrogen is required. Using hermetical type of equipment, it is suggested that all the treating equipment is covered and the dispersing solvent is recovered by recovering equipment.
However, for recovery of almost all the solvent, a lot of air must be present and the concentration of recovered solvent becomes very thin, only about 0.1 percent.
Therefore, for re-use as a liquid solvent after liquification, a complex operation and high costs are usually unavoidable. Further, a lot of gas must be treated which needs large recovery equipment, has a high installation cost and a large installation space. There are also problems in the recovery rate and quality of the solvent to be recovered.

Meanwhile, it is suggested that treatment is done under a hermetical atmosphere after work is placed in the treating tank, and solvent gas in the treating tank is fed to the recovery equipment by pressure reduction apparatus to recover the solvent, then the work insertion entrance of the treating tank is opened to take out the work. But even in this case, a lot of solvent loss occurs unless there is solvent recovery equipment.

### Summary of the invention

This is the invention of an explosion-proof, safe hermetic method of treatment so that the natural and labour environment is secured without solvent recovery equipment and even when flammable solvent is used, consumption of inert gas for air replacement is little. This invention was made to solve the above-mentioned problems. The system consists of a treating tank, treating support equipment and pressure reduction apparatus.
The system is characterized in the following processes; in the hermetic method of treatment where the above equipment and apparatus are each linked hermetically, and the treating tank is insulated from the other equipment and the work insertion entrance of the treating tank is opened, then the work is placed in the treating tank and the work insertion entrance of the treating tank is closed to make the inside of the tank hermetic.
Gas in the treating tank is purged by the pressure reduction equipment and liquid solvent or gas solvent etc, required for treating the work is supplied from the treating support equipment to the treating tank and the work is treated. Then, the treating tank is insulated from other equipment and gas in the treating tank is transferred by the pressure reduction apparatus and recovered into the treating support system. Gas is taken into the treating tank, then the work insertion entrance is opened to take out the work. Meanwhile, the system consists of a work input/extract box, treating equipment and pressure reduction apparatus and these are linked to each other under hermetic atmosphere and in the treating equipment where the entrance for passing the work and the shutter which makes the entrance hermetic are connected, then the lid of the work input/extract box is opened while the shutter is closed and the work is placed. The lid of the work input/extract box is closed and made hermetic.
Gas in the work input/extract box is purged outside the system by pressure reduction apparatus and gas in the treating equipment system is taken into the work input/extract box to equalise the pressure in the work input/extract box and that in the treating equipment. Then, the shutter between the work input/extract box and treating equipment is opened to transfer the work from the work input/extract box to the treating equipment and the treatment is carried out in the treating equipment. After treatment, the work is transferred to the work input/extract box and the shutter is closed. After the work input/extract box and treating equipment are insulated, gas in the work input/extract box is absorbed by the pressure reduction apparatus to return it to the treating equipment system. Then, after the gas is taken out of the work input/extract box, the lid is opened to take out the work. If the above method of treatment is applied, loss of solvent becomes minimal which contributes to improving the natural and labour environment. Further, no air or accompanying moisture on the work enters into the solvent treating equipment. So, there are no effluents including solvent, no water freezing in equipment, no corrosion of equipment and no deterioration of solvent.
Meanwhile, even if flammable solvent is used, this system can be said to be safe, closed treatment equipment with regard to explosions, as the consumption of inert gas for air replacement is minimal. Another advantage is that gas purged outside the system is very minimal and if required the gas can be highly concentrated.

### Brief description of the drawings

Fig. 1. is a drawing explaining a practical embodiment based on Claim 1 of this invention.

Fig 2. Is a drawing explaining another practical embodiment based on claim 1 of this invention.

Fig 3. Is a drawing explaining also another practical embodiment based on claim 1 of this invention.

Fig 4. Is a drawing explaining also another practical embodiment based on Claim 1 of this invention.

Fig.5. is a drawing explaining also another practical embodiment based on Claim 2 of this invention.

Fig.6. is a drawing explaining also another practical embodiment based on Claim 2 of this invention.

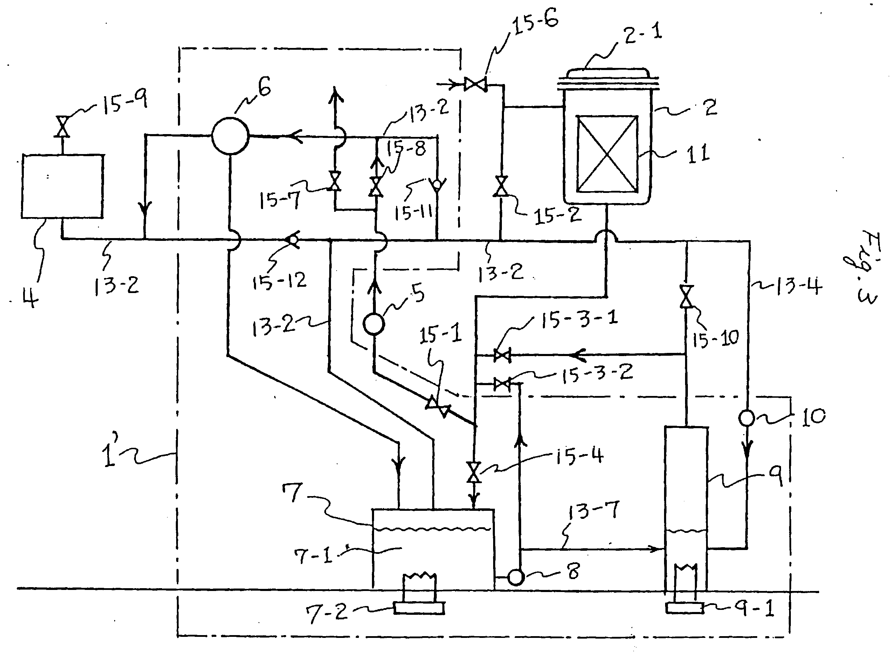

Marks and numbers are common to all drawings; 1' is the treating support equipment, 1 is the treating equipment, 1-1 is No.1 tank of the treating equipment, 1-1-1 is the thermostat of No.1 tank, 1-2 is No.2 tank of the treating equipment, 1-2-1 is the thermostat of No.2 tank, 1-3 is No.3 tank of the treating equipment, 1-3-1 is the thermostat of No.3 tank, 1-4 is No.4 tank of the treating equipment, 1-5 is the cooling coil, 2-2' is a treating tank, 2-1 is the work insertion entrance of the treating tank, 3,3' is a work input/output box, 4 is a gas holder, 5 is the pressure reduction apparatus, 6 is the condenser, 7 is the treating liquid tank, 7-1 is the solvent for the treating liquid tank, 7-2 is the thermostat of the treating liquid tank, 8 is the treating liquid pump, 9 is the solvent steam generator, 9-1 is the heater for the solvent steam generator, 10 is the blower, 11 is the work, 11-1 to 11-4 are positions of work, 12-1 and 12-2 are shutters, 13-1 and 13-8 are lines showing relationship among the main equipment, 14 is plastic recovery apparatus, 15-1 to 15-13 are valves and non-return valves, 16 are waste plastic vessels. Part enclosed by broken line of Fig.3 shows the case where there is a "work input/output box" at outlet only.

### Detailed description of the invention

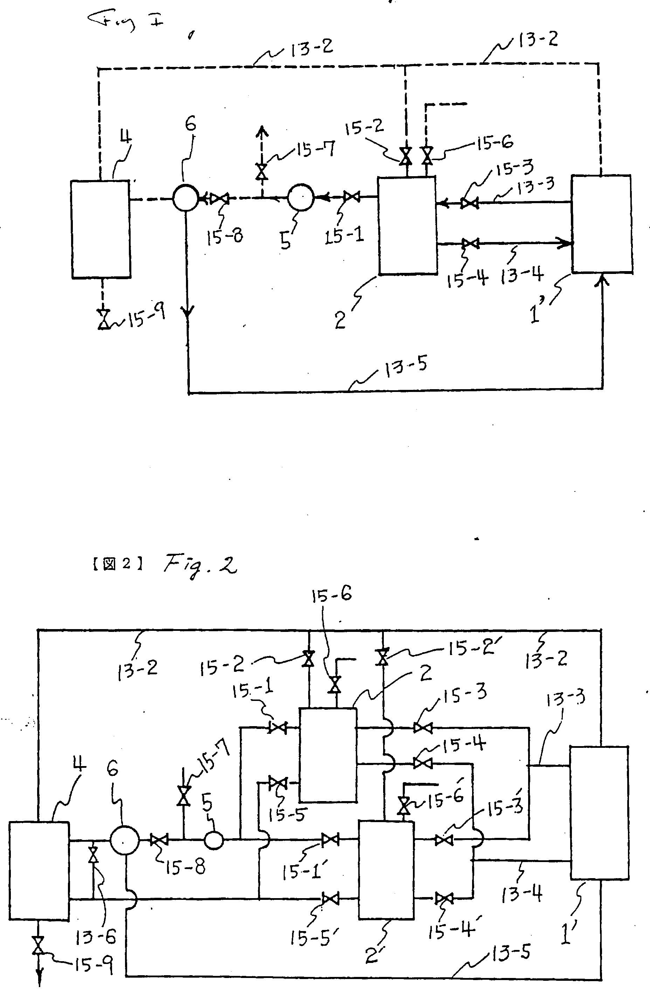

The following is an explanation according to the embodiment of the invention. The explanation refers to functions and each opening and closing of the lines may be omitted from the explanation. Fig. 1 shows the main equipment in the closed system and the main interrelation. Treating tank 2 has a work insertion entrance which takes in and out the work for hermetic treatment. Except when the lid of the work insertion entrance is open for inputting and extraction of the work in the treating tank and the treating tank is under reduced pressure by use of pressure reduction equipment, treating tank 2, treating support equipment 1 and gas holder 4 (to adjust or vary the volume of gas inside the system) are interrelated by line 13-2 and each part of the equipment is placed under equal pressure. Basically, valve 15-9 is closed and there is no place where gas inside the system is purged. The gas holder is interrelated to the treating support system and for example, a floating gas holder or flexible bag such as having a function to adjust or vary the gas volume without a large influence on pressure inside the system.
Pressure inside the gas holder can be designed as required by a known method and it is put under minus pressure when gas inside the system is be kept inside the system and under plus pressure when air is to be prevented from entering into the system.
This mechanism ensures no air inflow into the treating equipment from outside the system, nor any outflow of gas from the system. The treating support equipment is an equipment group which provides the means required for treating the work in the treating tank. These functions include supply, circulation, extract and storage of the treating liquid to the treating tank or generation and supply of solvent steam for steam treatment or recovery of concentrated solvent liquid, etc.

The following is an explanation of the processes.

The 1st process - valves 15-1, 15-2, 15-3, 15-4 and 15-6 are closed. After treatment, tank 2 is insulated from the other equipment, the lid of the work insertion entrance is opened and the work is placed in treatment tank 2, then the lid of the work insertion entrance is closed hermetically.

The 2nd process - while valve 15-8 is closed, gas inside the treating tank is purged outside the system through valve 15-1, pressure reduction apparatus 5 and valve 15-7. However, if the degree of vacuum is not enough, air in compliance with the degree of vacuum remains as a result of which air is brought into the treating equipment system.
The air volume is however very small which creates no problem usually, but when flammable solvent is used, it is desirable to purge the air as it accumulates in the treating equipment system. As a mode of purge, it is desirable, in view of keeping a higher replacement rate per volume of inert gas to introduce inert gas from valve 15-6 at inflow velocity to keep the pressure reduction after the first gas inside the treating tank is purged under reduced pressure.

The 3rd process - the gas inside the treating equipment, consequently gas kept in gas holder 4 is returned to treating tank 2 by opening valve 15-2 and pressure inside the treating tank is equalled to the pressure inside the system. Of course, another method, that is, a similar performance is done from valve 15-3 through line 13-2 and treating support equipment 1'. This method is also acceptable in view of the theory of this invention. As regards the main process where the gas in gas holder 4 is returned to treating tank 2, it is convenient in view of the equipment that, when the next operation is to introduce treating liquid to treating tank 2, such a main process is omitted and the treating liquid is absorbed from the treating liquid tank by using reduced pressure inside the treating tank.
In this case, gas in the gas holder is supplied to the treating liquid tank through the pressure equalised line.

The 4th process - this is the treating process where work is treated in such a way that while valve 15-2 is opened, liquid or gas solvent etc is supplied or purged for treating work through valves 15-3 and 15-4 which connects to treating tank 2 with treating support equipment 1', and lines 13-3 and 13-4. For instance, the above liquid is supplied to treating tank 2 until the work is submerged in treating solvent liquid by treating support equipment 1', line 13-3 and valve 15-3 and the work is treated, for example, by a supersonic wave generator of treating tank 2. Then, treating liquid in treating tank is purged into treating support equipment 1' through valve 15-4 and line 13-4 and solvent steam for steam treatment is supplied to treating tank 2 through line 13-3 and valve 15-3 and the concentrated solvent liquid and non concentrated gas in the treating tank is returned to treating support equipment 1 through 15-4. Other required treatments, for instance, drying the work by hot air circulation or raising the temperature etc are done by valves 15-3 and 15-4 and lines 13-3 and 13-4. During these treatments temperatures may vary in such equipment as the treating tank, treating liquid tank, solvent steam generator etc and as a result, partial pressure of solvent may vary and the gas volume kept within the system may vary.

Increase and decrease in the gas volume which is generated in the whole system is balanced by pressure equalised pipe 13-2 in compliance with the varied volume of gas holder 4, so it is not required to purge gas outside the system or introduce air from outside the system.

The 5th process - after treatment, gas in the treating tank is kept in gas holder 4 and the concentration of gas in the treating tank after the gas is purged is lowered. The objects of lowering the gas concentration are firstly to prevent environmental contamination and solvent loss by solvent gas accompanied by work when it is taken out, secondly, when flammable solvent is used, to keep the concentration of solvent lower than the flashing point, thirdly, to reduce the volume of solvent purged on the 2nd process. While valves 15-2, 15-3, 15-4, 15-6 and 15-7 are closed, treating tank 2 is insulated from the other equipment and gas in the treating tank is held in gas holder 4 through valve 15-1, pressure reduction apparatus 5, and valve 15-8. In this case, it is preferable that gas from the pressure reduction apparatus is chilled at condenser 6 and non concentrated gas is held in gas holder 4.
Although not illustrated on the drawing, for instance, it is possible to have a route which passes to gas holder 4 from pressure reduction apparatus 5 through treating support equipment 1'. Condensed liquid is returned to treating support equipment 1' by line 13-5.

The 6th process - gas is introduced to treating tank 2 through valve 15-6 and the tank returns to atmospheric pressure.

The 7th process - the lid of the work insertion entrance is opened and the work is placed taken out. Then all the processes are completed. The whole system is closed and at the starting and completing of the operation, that is at placement and taking out of the work, there is no change in the volume of gas held in the system and increase and decrease in volume of gas held in the system by temperature, etc during the operation is balanced by the gas holder and no gas is purged outside the system nor is any air taken into the system at every time of operation. Thus, the closed treatment system of this invention is established. Since there is no distribution of gas between the outside and the inside of the system, there is no moisture accompanied by air nor inflow of oxygen inside the equipment
In the system as explained above, the concentration of solvent in the treating tank on the 7th process where work is taken out and the concentration of solvent in gas purged outside the system from the treating tank on the 2nd process depends upon the concentration of gas and the objective degree of reduced pressure in the treating tank on processes after the 5th process.
It is desirable that the higher the objective degree of reduced pressure, the lower the concentration of solvent. For instance, when the concentration in the treating tank before entering into the 5th process is 100% and the objective degree of reduced pressure is 30 torr, the concentration in the treating tank after termination of the 6th process becomes about 4%. Meanwhile, the former concentration is 28%, the latter one becomes about 1.1%.
As another method of lowering the concentration of solvent gas in the the treating tank after the 5th process, it is effective that gas is circulated among valves 15-1, pressure reduction apparatus 5, valve 15-8, condenser 6, gas holder 4, line 13-2 and treating tank 2. Of course, in this case it is allowable, although not illustrated, that a line which bypasses gas holder 4 is installed and gas is circulated from condenser 6 to line 13-2.
As another method of lowering the concentration of solvent gas in the treating tank after the 5th process, it is also effective for replacement that after the gas in the treating tank is purged by the pressure reduction apparatus, gas in gas holder 4 is introduced under reduced pressure, for instance from line 13-2 and valve 15-2.
In this case, whether concentration at completion of the 4th process is 100% or 28%, the concentration in the treating tank after liquid solvent in the treating tank is evaporated can be lowered to the equilibrium concentration of the gas temperature at the outlet of the condenser. For instance, in case Trichloro ethylene is used as a solvent and the temperature of the condenser is set at 3°C, the concentration becomes about 3.2% and when the degree of pressure reduction on the 6th process is set at 30 torr, concentration of gas purged on the 2nd process becomes about 0.13%.

Further, when the objective degree of reduced pressure comes to 1 torr, the concentration can be 40ppm. In the above operation, when concentration of gas solvent purged on the 2nd process is short as complimental to the 5th process, inert gas from outside the system is purged. The quantity of inert gas supplied here is totally equal to that purged outside the system from the treating equipment system.
From this fact, it is preferable to lower the concentration of solvent in the treating tank with a lesser quantity as possible of inert gas for the purge. As such a method, an effective purge can be done with a lesser quantity of inert gas when, after the completion of the 5th process and the inside of treating tank becomes under reduced pressure, inert gas is supplied to treating tank 2 to lower the concentration in the treating tank while the pressure in the treating tank is kept at a higher reduced pressure as possible as allowed by the capacity of the pressure reduction apparatus.

The Japanese patent, Toku-Kai-Sho 59-132919 suggests, that a method of lowering the concentration of solvent in the treating tank, is the repetition of the introduction of air for returning to normal pressure after gas in the treating tank is absorbed and purged by pressure reduction apparatus. However, in this suggestion, the reduction rate of the concentration to the quantity of supplied inert gas, for instance, when the objective degree of pressure reduction is 30 torr, the concentration after completion of one repetition is reduced only to about 4% to the initial concentration. In this case the supplied quantity of inert gas is 0.96 times the volume of the treating tank.
Under the same conditions as above, if the method of the invention is compared with the case, that is, where the purge is done at the objective degree of vacuum of 30 torr by using inert gas volume, of which is 0.96 times that of treating tank 2, inert gas under normal pressure which is 0.96 times the volume of the treating tank is introduced to treating tank 2 while pressure inside the treating tank is kept at 30 torr. Then, the inert gas expands about 25 times in the treating tank and as a result it is diluted by a quantity of gas which is about 24 times the volume of the treating tank. The concentration after completion of the operation becomes 1.4 x 10⁻⁹% against the initial concentration. From the above facts, the effect of this invention can be said to be stupendous.
Special attention must be paid to keeping the equipment hermetic because, if air comes into the system during the above operations, the volume of gas held in gas holder 4 increases and it must be purged outside the system from valve 15-9. In this case, if the volume of solvent purged outside the system is within the allowable limit it is purged as it is, but if it is not within the limit, it is recovered by a conventional method such as condensed, chilled, absorbed, or recovered by an absorbing agent. But in the method of this invention, the usually treated volume is very small and so it is very favourable.
Next, an explanation follows in case there are plural treating tanks (2,2').

In Fig.2, if the treating process of the one treating tank 2 is on a timing when gas in the gas holder is returned to the treating tank which is the above mentioned 3rd process and the other treating tank 2' is on timing when the gas in the treating tank is purged which is the above mentioned 5th process, as illustrated in Fig 1, gas may be moved by the pressure reduction apparatus directly to the other treating tank 2' from the one treating tank 2 not through gas holder 4. This means that gas holder 4 is not needed, or its size may be reduced.
Meanwhile, if the treating process of the one treating tank 2 is on a timing when gas is returned to the treating tank from the gas holder which is the above mentioned 3rd process and the other treating tank 2', is on a timing when the gas in the treating tank is purged which is the above mentioned 5th process, the total treatment in both treating tanks can be done by moving gas from the other treating tank 2' through valve 15-1', pressure reduction apparatus 5, valve 15-8, condenser 6, line 13-6 and valve 15-5.
Meanwhile, gas can be moved from treating tank 2 to treating tank 2' which is a reverse operation.
The functions and applications of the treating tank, the gas holder and the treating support equipment, control of pressure inside the system, means of lowering the concentration of gas inside the treating tank, treatment of excessive gas etc are as explained in Fig.1.

Fig.3 shows a flow chart of washing equipment which consists of a treating tank 2, treating support equipment 1', and a gas holder 4 which is enclosed by a broken line.

Solvent vessel 7, generator of solvent steam 9, condenser 6 and gas holder 4 are usually under equal pressure as that of the gas holder by valves 15-2 and 10 and pressure equalized line 13-2. The inside temperature of the generator of solvent steam 9 is heat controlled by heater 9-1 to become almost under atmospheric pressure while partial pressure of solvent steam is below atmospheric pressure and the temperature of the solvent 7-1 is controlled by thermostat 7-2 so as to be lower than that of the generator of solvent steam 9.
It is convenient that the position of valve 15-4 for purging liquid from the treating tank is higher than the level of solvent liquid of solvent vessel 7 and it is so shown in this illustration. When purging liquid of treating tank 2 to the treating liquid tank, although not illustrated, a transfer apparatus can be used.
Valves 15-1, 15-2, 15-3-1, 15-3-2, 15-4 and 15-6 are closed. Under such conditions, the lid of the work input/extract box 2-1 is opened to place the work 11 into the treating tank 2 and the lid of the work input/extract box 2-1 is closed hermetically. Air inside the treating tank is purged outside the system through valves 15-1, and 15-7, and pressure reduction apparatus 5.
Then, valves 15-1 and 15-7 are closed to suspend the pressure reduction apparatus and valve 15-2 is opened to introduce gas within the system to the treating tank from gas holder 4 through equal pressure line 13-2, non return valve 15-12 and valve 15-2, then the pressure in the treating tank is equal to that in the system.
This is the example where the pressure in the treating tank is equal to that of the gas holder, but when it is convenient to transfer to the next process under reduced pressure as in the case when the next process falls to introducing the treating liquid to the treating tank, the operation is transferred to the next process without equalized pressure. When the pressure in the treating tank is equalized, solvent is introduced into treating tank 2 by pump 8 through valves 15-3 and 15-2 and treatment by liquid solvent and chilling of work are done simultaneously.

Gas in the treating tank is purged into the gaseous space of the solvent vessel 7 (No.seven) through nozzle 15-2 and line 13-2. When transferred to this process while keeping the treating tank under reduced pressure, treating liquid 17-1 of treating liquid tank 7 can be soaked up into treating tank 2 by opening valve 15-3-2, not by using pump 8. In this case, gas in the gas holder is introduced into treating tank 2 through line 13-2 and non return valve 15-12. For enhancing the treating effect with the treating liquid, agitation is, if required, done by rotary wing, trembler or shaking board. After completion of the liquid treatment, valve 15-3-2 is closed and pump 8 is suspended, if used, and valve 15-4 is opened to recover liquid into solvent vessel 7. Then, the gas flows into the treating tank from the solvent vessel through line 13-2 and the condition of equalized pressure is maintained. After liquid is purged, valve 15-10 is closed and valve 15-3-1 is opened, then gas in gas holder 4 is fed as carrier gas into the liquid of the generator of solvent steam 9 by blower 10 and the solvent is evaporated to the concentration of solvent steam corresponding to temperature of the generator of solvent steam and accompanied by blown carrier gas, the evaporated solvent is introduced into the treating tank through valve 15-3-1. In treating tank 2, solvent is condensed on the surface of the work, whose temperature is lower than that of the solvent steam, and solvent substance attached to the surface of the work and solvent including micro particles insoluble to the solvent are flushed by the condensed solution and it is recovered into solvent vessel 7 through valve 15-4.

It is designed so that solvent corresponding to the solvent evaporated by the generator of solvent steam 9 is automatically complimented from solvent vessel 7. When the temperature of the work rises and condensation is suspended on its surface, the operation of blower 10 is suspended and valve 15-3-1 is closed and valve 15-10 is opened and then the process of steam treatment is completed. Then, valves 15-2 and 15-4 are closed and treating tank 2 is insulated from the treating tank and solvent gas in the treating tank is introduced to condenser 6 through valves 15-1 and 15-8 then, solvent which is condensed liquified is held in solvent vessel 7 and non-concentrated gas is held in gas holder 4, Next, valves 15-2 and 15-4 are closed and treating tank 2 is insulated from other equipment and solvent gas in the treating tank is introduced into condenser 6 by the pressure reduction apparatus through valves 15-1 and 15-8, then solvent which is condensed liquified is held in solvent vessel 7 and non-condensed gas is held in gas holder 4. Next, valve 15-1 is closed and the operation of the pressure reduction apparatus is stopped, then valve 15-6 is opened and the inside of the treating tank is kept under atmospheric pressure and the lid of the work insertion entrance of treating tank 2-1 is opened and treated work is taken out which is the completion of all the treatment.
In this case, the functions and applications of the treating tank, the gas holder and the treating support equipment and control of pressure inside the system, means of lowering concentration of gas in the treating tank, treatment of excessive gas, etc, are as explained in Fig. 1.

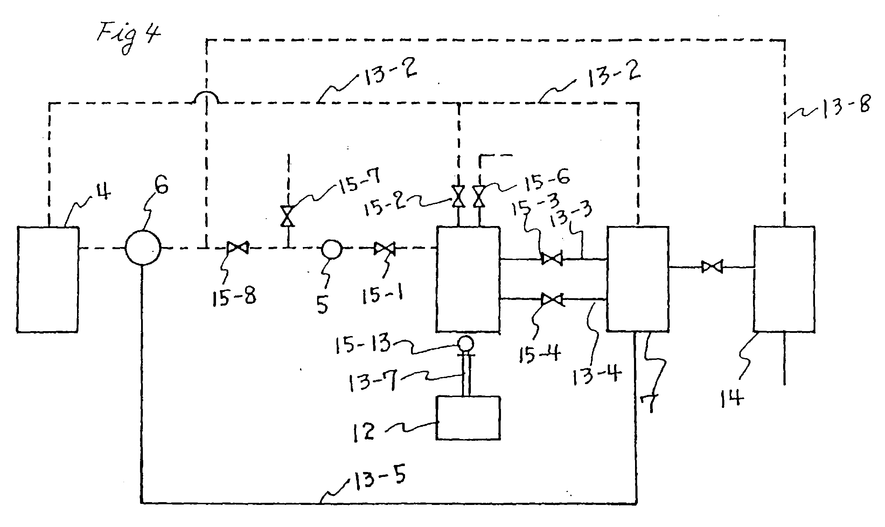

Fig.4 shows the embodiment of this invention in order that the loss of solvent is minimized in the process of dissolving waste plastics which are bulky and have various types in the process where waste plastics are dissolved with solvent and the solvent is evaporated and recovered from the dissolved liquid to recover the plastics.
The explanation follows according to Fig.4.
In this embodiment, waste plastics are foam styrene and the treating liquid is dichloromethylene. Waste plastics vessel 16 is a storage tank for the crushed waste plastics.
Treating tank 2 is connected with a screw conveyor 13-7 which receives crushed waste plastics from waste plastics vessel 16 and ball valve 15-4 to close treating tank after its reception. Valves 15-1, 15-2, 15-3 and 15-4 are closed and the crushed plastics of the waste plastics vessel 16 are compressed and fed into the treating tank by a screw conveyor 13-7, and ball valve 15-3. Next, valves 15-6 and 15-13 are closed and air inside the treating tank is purged outside the system by valve 15-1, pressure reduction apparatus 5 and valve 15-7. Then, valve 15-1 is closed and valve 15-3 is opened and the treating liquid is absorbed from the treating liquid tank. Gas is supplied to the treating tank from the gas holder and equalized pressure inside the system is maintained. After the treating liquid is absorbed, valve 15-3 is closed. After the waste plastics are dissolved, valves 15-2 and 15-4 are opened and the liquid is returned to treating liquid tank 7. Liquid inside the treating liquid tank is transferred to plastic recovery vessel 14 keeping the concentration in the treating liquid tank as about 30 percent weight and the treating agent is gasified to gain a plastic regenerated product and the gasified treating agent is liquified in condenser 6 via line 13-8 and returned to treating liquid tank 7. Next, valves 15-2, 15-4 and 15-7 are closed and valves 15-1 and 15-8 are opened then the pressure reduction apparatus is started and the treating agent in the treating tank is fed into condenser 6 and gas holder 4. In condenser 6, it is chilled to about 3°C and a part of the treated gas is condensed, liquified and recovered to treating liquid tank 7 through line 13-5. Gas not condensed is returned to gas holder 4. After the treating agent in the treating tank is purged, valve 15-6 is opened to introduce air for atmospheric pressure and the whole operation is finished.

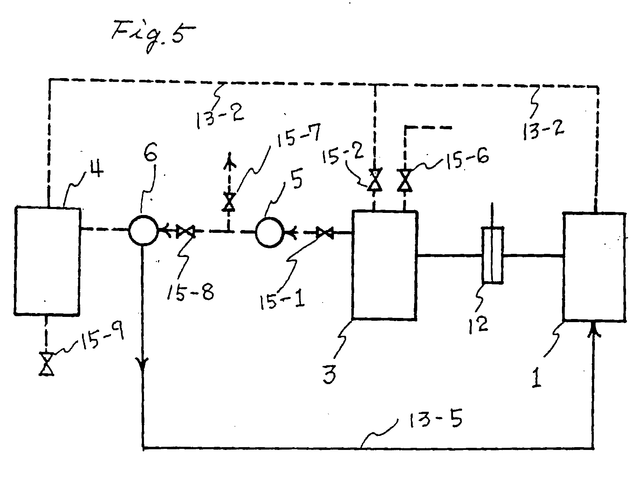

Fig.5 shows the main equipment inside the closed system based on claim 2 and their main relationship. Work input/extract out box 3 has a work input/extract entrance and a lid to make the entrance hermetic. Further, between the work input/extract box 3 and treating equipment 1, there is an opening through which work can pass and a shutter 12 which can shut the opening hermetically.

Even if shutter 12 is opened, the hermetic condition is maintained towards the outside and there is a function to transfer work between work input/extract box 3 and the treating equipment 1, and after its transfer, hermetic condition is still kept between work input/extract box 3 and treating equipment 1. Usual mechanical transfer means can be used for transfer between work input/extract box 3 and treating equipment 1 and between treating equipment 1 and work input/extract box 3. No other special means are designated. Gas holder 4 should preferably be of a type which is interrelated in the treating equipment system and the gas holding volume of gas holder 4 itself can vary without a large change in pressure, for example, floating type or bellows type. Pressure in gas holder 4 can be designed as required, to be plus pressure when gas leakage outside the system is regarded as serious and minus pressure when air inflow inside the system is regarded as serious.
Except when the lid of the work input/extract box 3 is opened for the input/extract of the work and work input/extract box 3 is under the operation of reduced pressure by the pressure reduction apparatus 5, the work input/extract box 3, gas holder 4 and treating equipment 1 are connected by line 13-2 and each part of the equipment is under equalized pressure. Basically, valve 15-9 is closed and a change in the gas holding volume by change in the temperature and the pressure in the treating equipment is balanced by change in the volume of gas holder 4 by line 13-2 and it is so designed that there is no air inflow from outside the system nor outflow of gas from inside the system. Treating equipment 1 treats the work from work input/extract box 3 with the treating liquid, the treating steam, hot air for drying etc and the whole equipment is hermetic and this hermetic equipment has treating functions required for treatment of work, for instance, it is the conventional washing equipment with multiple tanks which is totally hermetic or a hermetic dry cleaning machine, etc.

The 1st process; valves 15-1, 15-2, 15-6 and shutter 12 are closed and work input/extract box 3 is insulated from the other equipment. Then, the lid is opened to place work into work input/extract box 3 and the lid is closed for the hermetic condition.

The 2nd process: while valve 15-8 is closed, gas in work input/extract box 3 is purged outside the system through valve 15-1, pressure reduction apparatus 5 and valve 15-1.
But if the degree of vacuum is not enough, air in compliance with the degree of vacuum remains which results in an air inflow into the treating equipment 1. Its air volume is very small, but when flammable solvent is used it is accumulated in treating equipment 1 which is preferably purged. As mode of purge, for instance, after gas in work input/output box 3 is purged firstly under reduced pressure and an inert gas is introduced from valve 15-6 at such speed as to keep the reduced pressure. This mode is preferable in view of enhancing the rate of replacement per volume of inert gas used.
After completion valves 15-1, 15-6 and 15-7 are closed and pressure reduction apparatus 5 is suspended.

The 3rd process; valve 15-2 is opened and gas in treating equipment 1, and consequently the gas held in gas holder 4 is returned to work input/extract box 3 and pressure in the work input/extract box 3 is equalised as to that in treating equipment 1.
Of course, another method is also acceptable in view of embodying this invention. For instance, the above operation can be done by supplying gas from shutter 12 through line 13-2 and treating equipment 1.

The 4th process; work is transferred to treating equipment 1 from work input/extract box 3 by shutter 12 then, work is treated in treating equipment 1. The method of transfer is conventional and not designated specially. Treating equipment 1 is connected with gas holder 4 and kept under almost the same atmospheric pressure as that in gas holder 4.
In this case, treating equipment 1 means for instance a hermetic washing machine with 3 washing tanks, dry cleaning machine, soaking type coating machine etc. During the above operation, the temperature varies in such equipment as work input/extract box 3, the liquid solvent tank, the steam generator, etc and partial pressure of the solvent varies and therefore the quantity of gas held in the system also varies.
The increase and decrease of the gas volume generated in the whole system during this operation is balanced by change in the volume of gas holder 4 by equalised pressure pipe 13-2 and so it is not necessary to purge air outside the system or introduce air inside the system.

The 5th process; after completion of the treatment, the gas in the work input/extract box 3 is held in treating equipment 1, consequently, gas holder 4 and the gas concentration in the work input/extract box 3 is lowered after the gas is purged.
The purpose of lowering the gas concentration is to prevent environmental contamination and the loss of solvent which are caused by solvent gas accompanying the work which is taken out and when flammable solvent is used, to keep the solvent concentration below its flash point, further, to decrease the quantity of solvent purged on the 2nd process. After the work input/extract box 3 is insulated from the other equipment while valves 15-1, 15-2, 15-6 and shutter 12 are closed, the gas in work input/extract box 3 which is condensed liquified through valve 15-1, pressure reduction apparatus 5 and valve 15-8, preferably condenser 6, is returned to treating equipment 1 by line 13-5 and non condensed gas is retained in gas holder 4. Although not illustrated, it is also acceptable in view of embodying this invention to install another route as leading to gas holder 4 through treating equipment 1 from pressure reduction apparatus 5.

The 6th process; gas is introduced to the work input/extract box 3 through valve 15-6 to keep the atmospheric pressure therein.

The 7th process; the lid is opened to take out work.

Now, all the processes are completed.

The equipment of this invention is totally hermetic and at points of starting and completing the operation, that is input and extract of work, there is no change in the quantity of gas held in the system, so no interrelation occurs between the outside and the system. Further, as mentioned above, the increase and decrease in quantity of retained gas by change in temperature which occurs in the system during this time is balanced by gas holder 4 and no air purge outside the system or air intake into the system is needed. Therefore, no substantial amount of moisture accompanied by air nor of course any inflow of oxygen is seen in the system
The concentration of solvent in the work input/extract box on the 7th process where work is taken out and the concentration of solvent in the gas purged outside the system from the work input/extract box on the 2nd process are influenced by the concentration of gas in the work input/extract box on subsequent processes after the 5th process and the objective degree of reduced pressure in the work input/extract box. It is preferable that the higher the objective degree at reduced pressure the lower the concentration of solvent. For instance, if the concentration of the work take in/out box before entering into the 5th process is 100% and the objective degree of reduced pressure is 30 torr, the concentration of the work input/extract box after completion of the 6th process is about 40%. Similarly, if it is 28%, it is about 1.1%. As a mode of lowering the concentration of solvent gas in the work input/extract box on subsequent processes after the 5th process, it is effective for instance, to perform a cycle before operation of the pressure reduction, in valve 15-1, pressure reduction apparatus, valve 15-8, condenser 6, gas holder 4, line 13-2 and work input/extract box 2.

Although not illustrated, it is acceptable in view of embodying this invention that the line which bypasses the gas holder 4 is installed to circulate directly to line 13-2 from condenser 6. As another method of lowering the concentration of solvent gas in the work input/extract box on subsequent processes after the 5th process, it is effective for instance that after gas in the work input/extract box is purged by pressure reduction apparatus, gas in gas holder 4 is introduced under reduced pressure from line 13-2 and valve 15-2 for replacement.
In this case, even concentration at termination of the 4th process is 100% or 28%, regardless of concentration, after liquid solvent in the work input/extract box is evaporated, concentration in the work input/extract box can be lowered to equilibrium concentration of gas temperature at outlet of condenser 6. For instance, when Trichloro ethylene is used as solvent and the temperature of condenser 6 is set at 3°C, its concentration is about 3.2% and if the degree of reduced pressure on the 6th process is set at 30 torr, concentration of gas purged on the 2nd process is about 0.13%. Further, the objective degree of reduction pressure becomes 1 torr, its concentration can be 40 ppm. In the above operation, if not satisfied with the solvent concentration of gas purged on the 2nd process, the purge can be done by inert gas from outside the system as a complimentary process of the 5th process. The quantity of inert gas supplied here becomes gas purged outside the system from the treating equipment system. From this fact, it is preferable that the concentration of the solvent in the work input/extract box is lowered by a small a quantity as possible of inert gas for the purge. As a mode of the treatment, for instance, an effective purge can be done with a bit of inert gas after the 5th process is completed and the inside of the work input/extract box is put under reduced pressure and inert gas is supplied into the work input/extract box to lower the concentration in the work input/extract box while pressure in the work input/extract box is maintained under as high a reduced pressure as allowable by capacity of pressure reduction apparatus.

The Japanese Patent Toku-Kai-Sho 59-132919 proposes that after gas in the work input/extract box is purged by the pressure reduction apparatus before taking out the work, the concentration can satisfactorily be reduced by repetition of the operation where normal pressure is gained by introducing air. However, in this proposal, as regards decreasing the rate of concentration against the quantity of supplied inert gas, if for instance, the objective degree of reduced pressure is 30 torr, the concentration after one repetition is reduced only to about 4% against the initial concentration. In this case, the supplied quantity of inert gas is 0.96 times the volume of the work input/extract box.
Now, a comparison is made by this invention under the same conditions as above, that is, the purge is done at the objective degree of vacuum 30 torr and the quantity of inert gas used is 0.96 times the volume of the work input/extract box. That is, if pressure in the treating apparatus is kept at 30 torr and the normally pressurised inert gas which is 0.96 times the volume of the work input/extract box is introduced into the work input/extract box, the inert gas expands about 25 times in the work input/extract box which as a result is diluted by gas of about 24 times the volume of the work input/extract box and the concentration after the operation is completed becomes 1.4 x 10⁻⁹ % against the initial concentration. From this, the effect of this invention can be said to be stupendous.
During the above operation, if air flows into the system, the quantity of gas held in the gas holder increases and it must be purged outside the system, so special attention must be paid for maintaining the equipment hermetic. In this case, if the volume of solvent purged outside the system is within the allowable limit, it is purged as it is, but if it is not within the limit it is recovered by a conventional method such as condensed, chilled, absorbed or recovered by an absorbing agent. But in the method of this invention, the usual treated volume is small and so, it is very favourable.

Next, an explanation follows on another embodiment based on claim 2 of this invention.

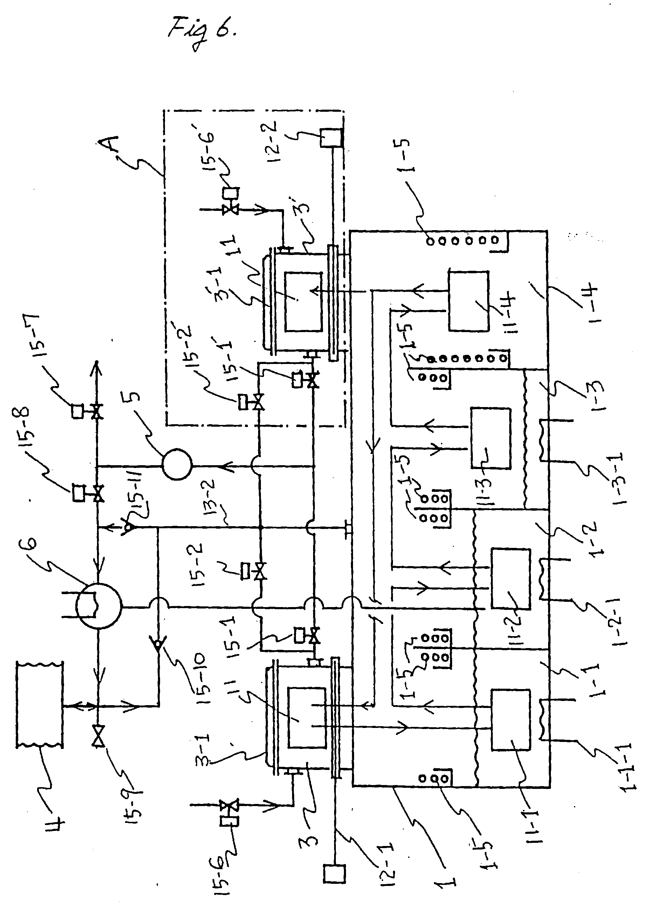

Fig.6. shows the main equipment and its inter-relations. The explanation is made on functions and may be omitted on opening and closing of lines and valves. In Fig.6 the work input/extract box 3 has a work insertion entrance, a lid which makes the entrance hermetic 3-1, an opening which transfers work 11 to treating equipment 1 and shutter 12-1 which shuts hermetically the connecting part with treating equipment 1. Treating equipment 1 is totally hermetic equipment, which has a treating function required for treating work in hermetic equipment. For instance, it may be a conventional treating type of equipment which has multiple washing tanks, hermetic dry cleaning machine, soaking type coating machine, etc. Gas holder 4 is interrelated with treating equipment 1 and the quantity of gas held in gas holder itself can vary and the pressure of holding gas does not vary so much by change in the gas holding quantity.
For example, they should preferably be of floating or bellows type gas holders. The work input/extract box 3 and treating equipment 1 are connected by an opening through which work passes and shutters 12-1, 12-2 which shuts the opening hermetically.
It is so designed that the hermetic condition is kept towards the outside even if shutters 12-1 and 12-2 are opened, thus, there is a function between the work input/extract box 3 and the treating equipment which transfers work 11 and after transfer, the hermetic condition is still kept between the work input/extract box 3 and treating equipment 1 by closing shutters 12-1 and 12-2.
A conventional mechanical transfer means is used to transfer work 11 from the work input/extract box 3 to treating equipment 1 and from treating equipment 1 to the work input/extract box 3. There is no designation to use special means. It is so designed that the quantity of gas held in the treating equipment varies by change in temperature, etc at various points on the treating processes but it is balanced by any change in the gas held in connected gas holder 4 and there is no exhaust of gas towards the outside nor inflow of air from outside.
Except when the work input/extract box 3 is under vacuum treatment operation and the lid is open for taking work 11 into the work input/extract box 3, the work input/extract box 3, treating equipment 1 and gas holder 4 are interrelated by a pressure equalized pipe to keep almost the same pressure as that in gas holder 4.
While shutter 12-1 and valves 15-1, 15-2 and 15-6 are closed, lid 3-1 of work input/extract box 3 is opened for placement of work 11.
Then, an operation is performed so that lid 3-1 is closed hermetically and the air in work input/extract box 3 is purged outside the system through valve 15-1, pressure reduction apparatus 5 and valve 15-7.
After the air purge is completed physically, valves 15-1 and 15-7 are closed and the operation of the pressure reduction apparatus is suspended. Next, an operation is performed so that gas in the treating equipment, and consequently gas in the gas holder is introduced to the work input/extract box 3 from gas holder 4 through non-return valve 15-10 and valve 15-2 to keep the same pressure as that in treating equipment 1. Then, shutter 12-1 is opened and work 11 is transferred to treating equipment 1 by work transfer equipment, in this illustration, to 11-1 in the 1st tank 1-1 of treating equipment 1.
Treating equipment 1 in this illustration is a conventional treating equipment type with a tank which is divided into four tanks by partition boards. As a solvent, trichloro ethylene was used for instance. The 1st tank 1-1 is a treating tank of warm solvent which is held at the bottom and controlled at the required temperature, for instance, 50°C by thermostat 1-1-1.
The 2nd tank 1-2 is a treating tank of cool solvent which is held at the bottom and controlled, for instance at 30°C by thermostat 1-2-1.
The 3rd tank 1-3 is a treating tank of solvent steam and liquid solvent is held at the bottom, for instance at 80°C. Its space is filled with solvent steam of a similar
temperature and solvent liquid of high purity is condensed on the surface of the work of a comparatively lower temperature.
The 4th tank 1-4 is the tank for drying and coil 1-5 is placed for cooling. Its space is filled with solvent steam of a lower concentration and liquid solvent of comparatively high temperature adhered to the work is dried by evaporation. Coils are placed for cooling on top of each of the tanks and the 4th tank 1-4 and the solvent gas evaporated from each tank is chilled liquified and collected to flow into the 2nd tank 1-2 although not illustrated. Meanwhile, if the liquid level of the 2nd tank 1-2 comes up to a certain point, it overflows to the 1st tank 1-1 and the liquid is complimented from the 1st tank to maintain as required the liquid level of the 3rd tank 1-3. Liquid of the 4th tank 1-4, although not illustrated, is taken out continuously or intermittently as sludge from the work is accumulated, they are then purified and the purified liquid is returned to the 2nd tank 1-2.
Work 11 is transferred to 11-1, 11-2, 11-2 and 11-4 in treating equipment 1 and after completion of the treatment, transferred to the work input/extract box 3. Then, shutter 12-1 and valve 15-2 are closed. The non-condensed gas in the work input/extract box 3 is recovered to gas holder 4 through valve 15-1, pressure reduction apparatus 5 and valve 15-8, then preferably, through condenser 6. Liquid solvent condensed and liquified in condenser 6 is then is recovered to treating 2nd tank 1-2. After gas in the work input/extract box 3 is practically purged, valves 15-1 and 15-8 are closed and the pressure reduction apparatus is suspended, then air is taken from valve 15-1 at atmospheric pressure and the lid of the work input/output is opened and washed work 11 is taken out. Any change in gas quantity in treating equipment 1 during this period is absorbed by gas holder 4.
That is, if the gas quantity is increased, it is stored in gas holder 4 through non return valve 15-11 and condenser 6 and if it is decreased it is returned to treating equipment 1 from gas holder 4 through non return valve 15-10.

The above is explanation of the whole treatment process of one work cycle, and practically it is designed so that the common equipment such as the pressure reduction apparatus etc, are adjusted for a smooth operation from the viewpoint of timing where work is continuously supplied for treatment and continuously taken out.
A work input/extract box is required when work is placed in and taken out from the treating equipment and may be exclusively installed depending on the timing of the treatment or structure of the treating equipment.
An explanation follows in case the work input/extract box at inlet 3 and the work input/extract box at outlet 3' are used.
(Part A enclosed by broken line is an added treating equipment).

While shutter 12-1, valve 15-1, 15-2 and 15-6 are closed, lid 3-1 of the work input/extract box at inlet 3 is opened to place work 11. Then, lid 3-1 is closed hermetically and an operation is performed so that air in the work take input/extract box at inlet is purged outside the system through valve 15-1, pressure reduction apparatus 5 and valve 15-7. After the air is practically purged, an operation is done so that valves 15-1 and 15-7 are closed and pressure reduction apparatus 5 is suspended and the gas in gas holder 4 is introduced to the the work input/extract box at inlet 3 through non-return valve 15-10 and valve 15-2 and pressure is equalled to that of the treating equipment. Next, shutter 12-1 is opened and work 11 is transferred to 11-1 of treating equipment 1 by a work transfer machine.
After this transfer, shutter 12-1 and valve 15-2 are closed. After the shutter is closed, gas in the work input/extract box at inlet 3 is recovered to gas holder 4 through valve 15-2, pressure reduction apparatus 5 and valve 15-8 and preferably condenser 6, then valve 15-1 is closed and air is taken from 15-6 which turns to atmospheric pressure.
Now, everything is ready for receiving the next work.

As regards to the work input/extract box of outlet 3', its lid 3'-1, valves 15-1, 15-2, 15-6 and shutter 12-2 are closed beforehand to receive work 11 and the gas inside is purged through valve 15-1, pressure reduction apparatus 5 and valve 15-7. Valves 15-1 and 7 are closed and the pressure reduction apparatus is suspended, then the gas in gas holder 4 is introduced through non return valve 15-10 and valve 15-2' and pressure is equalized as to that of the treating equipment and shutter 12-2 is kept open. After completion of the operation in the treating equipment, work is transferred to the work input/extract box at outlet. Then, shutter 12-2 and valve 15-2 are closed. The non-condensed gas in the work input/extract box 3 is recovered to gas holder 4 through valve 15-1, pressure reduction apparatus 5, valve 15-8 and preferably through condenser 6 and condensed liquid is recovered to 1-2.
When gas in the work input/extract box at the outlet is purged practically, valves 15-1 and 15-8 are closed and the pressure reduction apparatus is suspended, then air is taken from valve 15-6' which turns to atmospheric pressure and the lid of the work input/extract box at outlet is opened to take out the work. During this period valve 15-9 is basically closed and the change in the gas volume in the treating equipment is balanced by gas holder 4. That is, if the gas quantity is increased it is stored in gas holder 4 through non-return valve 15-11 and condenser 6 and if decreased, the gas in gas holder 4 is returned through non-return valve 15-10.
According to this invention, it is possible that a satisfactory operation is obtained even by not using the gas holder if the timing of the returning gas from gas holder and the timing of the purging gas before taking out the work from the work input/extract box at outlet 3' are met. For instance, after air is purged from the work input/extract box at the inlet, the operating time is set so that the time of introducing gas from gas holder and the time of purging gas from the work input/extract box at outlet are met.
Then, gas is supplied from the work input/extract box at outlet to the work input/extract box at inlet through valve 15-1, pressure reduction apparatus 5, valve 15-8, condenser 6, non return valve 15-10 and valve 15-2.
Similarly, after the gas is purged from the work input/extract at the outlet, gas can be transferred by not using the gas holder if the timing of the returning gas from the gas holder and the timing of the purging gas before taking out the work from the work input/extract box at the inlet are met.

That is, it is possible that gas is supplied to the work input/extract box at the outlet from the work take in/out box at the inlet through valve 15-1, pressure reduction apparatus 5, valve 15-8, condenser 6, non return valve 15-10 and valve 15-2. In this case, the capacity of the required equipment of the gas holder can be small which is effective.

## Claims

1. The mode of treatment under hermetic condition where the system consists of a treating tank, treating support equipment, and pressure reduction apparatus.
In the hermetic method of treatment where the above equipment and apparatus are each linked hermetically, and the treating tank is insulated from the other equipment and the work input lid of the treating tank is opened, then the work is placed in the treating tank and the work input lid of the treating tank is closed to make the inside of the tank hermetic. Gas in the treating tank is purged by the pressure reduction equipment and the liquid solvent or gas solvent etc, required for treating the work are supplied from the treating support equipment to the treating tank and the work is treated. Then, the treating tank is insulated from the other equipment and gas in the treating tank is transferred by the pressure reduction apparatus and recovered into the treating support system and gas is taken into the treating tank, then the lid of the treating tank is opened to take out the work.

2. The hermetic treating equipment consists of a work input/extract box, treating equipment and pressure reduction apparatus (these are respectively linked hermetically). In the treating equipment, there is an opening for passing the work into and a shutter, which makes the opening hermetic, are connected, then the lid of the work treating tank is opened while the shutter is closed and the work is placed.
The lid of work treating tank is closed and made hermetic. Gas in the treating tank is purged outside of the system by the pressure reduction apparatus and gas in the treating equipment system is taken into the treating tank to equalise the pressure in the treating tank and that in the treating equipment.
Then, a shutter between the treating tank and the treating equipment is opened to transfer the work from the treating tank to the treating equipment and the treatment is done in the treating equipment. After treatment, the work is transferred to the treating tank and the shutter is closed. After the work treating tank and treating equipment are insulated, gas in the work treating tank is absorbed by the pressure reduction equipment to return it to the treating equipment system. Then, after the gas is taken into the work treating tank, a lid is opened to take out the work

3. This is the mode of hermetic treatment described in claim 1. There are two treating tanks and they are adjusted so that the one of these tanks is located on the process where gas in the treating tank before the work is taken out is purged and recovered, while the other treating tank is located on the process where the work is placed and the gas is purged, then, gas inside the system is received into the treating tank. Further, both the above treating tanks are connected through the pressure reduction equipment and gas in the above one treatment tank is transferred to the other treating tank.

4. The mode and equipment of hermetic treatment described in Claim 1 or Claim 2 or Claim 3 where the volume of the gas holder is varied in accordance with the change in the volume of gas in the treating support equipment and or treating tank or treating equipment and or work input/extract box.

5. The mode of hermetic equipment described in Claim 4 where gas to be retained in the gas holder is chilled and treated beforehand then, held in the gas holder.

6. The mode and equipment of hermetic treatment described in Claim 1 or Claim 2 where in case work is taken out from the treating tank or the work input/extract box, gas in the treating tank is circulated between condensers and the concentration of solvent gas in the treating tank is lowered before the gas in the treating tank or the work input/extract box is transferred by the pressure reduction apparatus.

7. The mode and equipment of hermetic treatment described in Claim 1 or Claim 2 where in case the work is taken out from the treating tank or the work input/extract box, the pressure of gas in the treating tank or the work input/extract box is maintained under reduced pressure and the gas holder gas is supplied and the concentration of solvent gas in the treating tank is lowered after gas in the treating tank or work input/extract box is absorbed and taken out by the pressure reduction apparatus.

8. The mode and equipment of hermetic treatment described in Claim 1 and Claim 2 where in case the work is taken out from the treating tank or the work input/extract box, the pressure of the gas in the treating tank or the work input/extract box is maintained under reduced pressure and inert gas is supplied and the concentration of solvent gas in the treating tank is lowered after the gas in the treating tank or the work input/extract box is absorbed and taken out by the pressure reduction apparatus.

9. The mode and equipment of hermetic treatment described in claim 1 and claim 2 where gas in the treating tank is purged outside the system by the pressure reduction apparatus after the work is placed in the treating tank or the work input/extract box and inert gas is supplied while the pressure of gas in the treatment tank or the work input/extract box is maintained under reduced pressure and air or moisture remaining in the treating tank or the work input/extract box is purged.

10. The equipment of hermetic treatment described in Claim 2 where this is adjusted so that, in the hermetic treatment equipment having two work input/extract boxes, one of these work input/extract boxes is located in the process where the gas in the work input/extract box before the work is taken out and the other box is located in the process where the work is placed and the gas is purged, then gas in the treating equipment is received into the work input/extract box and both work input/extract boxes are connected through the pressure reduction apparatus and gas in the one work input/out box is transferred to the other work input/extract box.
